# NEUE EUROPÄISCHE PATENTSCHRIFT

(11) **EP 2 461 970 B2**
(45) Veröffentlichungstag und Bekanntmachung des Hinweises auf die Entscheidung über den Einspruch: **05.10.2022**
(45) Hinweis auf die Patenterteilung: 25.06.2014
(21) Anmeldenummer: 10737935.6
(22) Anmeldetag: 05.08.2010
(51) Int. Cl.: B32B 3/24, B32B 29/00, B42D 15/00

(54) **VERFAHREN ZUR HERSTELLUNG EINES SICHERHEITSELEMENTS UND NACH DEM VERFAHREN ERHÄLTLICHES SICHERHEITSELEMENT**
METHOD FOR PRODUCING A SECURITY ELEMENT AND SECURITY ELEMENT OBTAINABLE ACCORDING TO THE METHOD
PROCÉDÉ POUR FABRIQUER UN ÉLÉMENT DE SÉCURITÉ ET ÉLÉMENT DE SÉCURITÉ POUVANT ÊTRE OBTENU SELON LE PROCÉDÉ

(30) Priorität: 06.08.2009 DE 102009036314
(43) Veröffentlichungstag der Anmeldung: 13.06.2012
(73) Patentinhaber: Giesecke+Devrient Currency Technology GmbH, 81677 München (DE)
(72) Erfinder: OWEGER, Bernd, 83703 Gmund (DE); WINKLER, Karin, 83703 Gmund-Dürnbach (DE); WIEDNER, Bernhard, 83714 Miesbach (DE); HEIM, Manfred, 83646 Bad Tölz (DE); PLASCHKA, Reinhard, 86398 Schondorf (DE); KRETSCHMAR, Friedrich, 81929 München (DE); MENGEL, Christoph, 83607 Holzkirchen (DE); BURCHARD, Theodor, Götting 83052 (DE); LIEBLER, Ralf, 83727 Schliersee (DE); KELLER, Mario, 83358 Seebruck (DE); RUCK, Jürgen, 83737 Irschenberg (DE); HOFFMÜLLER, Winfried, 83646 Bad Tölz (DE)
(74) Vertreter: Giesecke + Devrient IP
(86) Internationale Anmeldenummer: PCT/EP2010/061405
(87) Internationale Veröffentlichungsnummer: WO 2011/015622

(56) Entgegenhaltungen:
- WO-A1-00/18575
- DE-A1- 10 163 381

## Beschreibung

Die Erfindung betrifft ein Sicherheitselement, das ein Substrat mit mindestens einer Öffnung aufweist, wobei die Öffnung einseitig mit einer zumindest teilweise transluzenten oder transparenten Folie verschlossen ist und sich auf der der Folie gegenüberliegenden Seite des Substrats im Bereich der Öffnung und im Wesentlichen im Bereich der Folienfläche eine Beschichtung befindet, und wobei die Beschichtung innerhalb der Öffnung nicht vorhanden bzw. im Wesentlichen nicht vorhanden ist. Die Erfindung betrifft des Weiteren Verfahren zur Herstellung eines solchen Sicherheitselements. Das erfindungsgemäße Sicherheitselement wird auf ein Wertdokument aufgebracht oder ist Teil eines Wertdokumentes. Ist das Sicherheitselement Teil eines Wertdokumentes, wird die Öffnung in das Substrat des Wertdokumentes eingebracht.

Ein Wertdokument im Sinne dieser Erfindung ist insbesondere eine Banknote, ein Wertpapier, eine Kredit- oder Ausweiskarte, ein Pass, eine Urkunde oder Ähnliches, ein Label, eine Verpackung oder ein anderes Element für die Produktsicherung.

Aus der WO 2005 / 116335 A1 ist ein Verfahren zur Herstellung von Sicherheitspapier mit mindestens einem transparenten Bereich für Wertdokumente bekannt. Das Sicherheitspapier besteht hierbei aus mindestens einer Lage aus im Wesentlichen nicht transparentem Material, das eine Öffnung bzw. ein Fenster aufweist. Die Öffnung wird zunächst einseitig durch eine transparente Abdecklage, insbesondere eine Folie oder Lackschicht, verschlossen und anschließend durch Extrusionsbeschichten mit einer transparenten Füllung gefüllt.

Der Erfindung liegt die Aufgabe zugrunde, ein gattungsgemäßes Sicherheitselement derart weiterzubilden, dass der Schutz gegenüber Fälschungen weiter erhöht wird.

Diese Aufgabe wird durch die Merkmale des unabhängigen Anspruchs gelöst. Weiterbildungen der Erfindung sind Gegenstand der abhängigen Ansprüche.

Die Erfindung betrifft ein Verfahren zur Herstellung eines Sicherheitselements, das ein Substrat mit mindestens einer Öffnung aufweist, wobei die Öffnung einseitig mit einer zumindest teilweise transluzenten oder transparenten Folie verschlossen ist, umfassend
ein Aufbringen einer Beschichtung, die durch einen Lack gebildet wird und eine nicht selbsttragende Schicht ist, auf ein mit einer durchgehenden Öffnung versehenes Substrat im Bereich der Öffnung, so dass die Beschichtung innerhalb der Öffnung nicht vorhanden bzw. im Wesentlichen nicht vorhanden ist, wobei das Aufbringen der Beschichtung passergenau durch Drucken durchgeführt wird, und
ein Aufbringen einer zumindest teilweise transluzenten oder transparenten Folie auf die der Beschichtung gegenüberliegenden Seite des Substrats, so dass die Öffnung einseitig mit der teilweise transluzenten oder transparenten Folie verschlossen ist und die Beschichtung auf dem Substrat im Wesentlichen im Bereich der Folienfläche angeordnet ist.

Allgemein werden die physikalischen Eigenschaften, insbesondere die Planlage eines eine Öffnung aufweisenden Substrates durch ein einseitiges Aufbringen einer Folie wesentlich beeinflusst. Das Ausdehnungsvermögen des Substrates, das aus Papier und/oder einer Kunststofffolie besteht, ist von den Parametern Temperatur, Feuchtigkeit sowie Orientierung der Faserstränge und Polymerstränge des Papiers bzw. der Folie abhängig. Verschließt man ein mit einer durchgehenden Öffnung versehenes Substrat einseitig mit einer Folie, deren Ausdehungsvermögen sich stark von dem des Substrates unterscheidet, können Feuchtigkeits- und/oder Temperaturveränderungen die Planlage des Substrates stark beeinträchtigen.

Erfindungsgemäß können Aufwölbungen des Substrates infolge von Feuchtigkeits- und Temperatureinflüssen vermieden werden, indem das mit einer Öffnung versehene Substrat einseitig mit einer zumindest teilweise transluzenten oder transparenten Folie verschlossen wird und auf die der Folie gegenüberliegenden Seite des Substrates im Bereich der Öffnung und im Wesentlichen im Bereich der Folienfläche, d.h. der Fläche der Folie, eine Beschichtung aufgebracht wird. Die Beschichtung wird dabei so aufgebracht, dass innerhalb der Öffnung kein bzw. im Wesentlichen kein Beschichtungsmaterial vorhanden ist, das Beschichtungsmaterial also nicht in die Öffnung "hineinfließt". Durch die Beschichtung wird gewissermaßen eine Gegenkraft zur zumindest teilweise transluzenten oder transparenten Folie aufgebaut. Das erfindungsgemäße Sicherheitselement erweist sich insbesondere beim Stapeln von Wertdokumenten, die das Sicherheitselement beinhalten, oder bei einer Weiterverarbeitung, z.B. Bedrucken oder Prägen, als vorteilhaft, weil hierbei eine plane Oberfläche erforderlich ist. Besondere Vorteile des erfindungsgemäßen Sicherheitselementes sind, dass die über der durchgehenden Öffnung aufgebrachte zumindest teilweise transluzente oder transparente Folie eine uneingeschränkte Überdruckbarkeit des Bereichs der Öffnung schafft und in Verbindung mit der auf der der Folie gegenüberliegenden Seite des Substrates aufgebrachten Beschichtung für eine erhöhte Stabilität beim Knicken oder Biegen durch Belastungs- und Spannungsausgleich sorgt.

Nachstehend erfolgt anhand von bevorzugten Ausführungsformen, auf die die Erfindung jedoch in keinerlei Weise beschränkt sein soll, eine ausführliche Beschreibung der Erfindung. Die beschriebenen Einzelmerkmale und nachfolgend beschriebenen Ausführungsformen sind für sich genommen erfinderisch, aber auch in Kombination erfinderisch.

Gemäß einer ersten bevorzugten Ausführungsform wird ein Sicherheitselement, das ein Substrat mit mindestens einer Öffnung aufweist, wobei die Öffnung einseitig mit einer zumindest teilweise transluzenten oder transparenten Folie verschlossen ist, hergestellt, indem eine Beschichtung auf eine Seite des Substrates aufgebracht wird, danach im Substrat und der auf das Substrat aufgebrachten Beschichtung eine durchgehende Öffnung erzeugt wird und anschließend eine zumindest teilweise transluzente oder transparente Folie auf die der Beschichtung gegenüberliegenden Seite des Substrates aufgebracht wird, so dass die Öffnung einseitig mit der zumindest teilweise transluzenten oder transparenten Folie verschlossen ist und die Beschichtung auf dem Substrat im Wesentlichen im Bereich der Folienfläche angeordnet ist.

Das Substrat kann ein- oder mehrlagig ausgebildet sein und aus Papier und/oder einer Kunststofffolie bestehen. Als Papier kommt jede Art von Papier in Betracht, insbesondere Papier aus Baumwolle. Selbstverständlich kann auch Papier eingesetzt werden, welches einen Anteil x polymeren Materials im Bereich von 0 < x < 100 enthält. Als Kunststofffolie kommt z.B. eine Polyesterfolie in Betracht. Die Folie kann ferner monoaxial oder biaxial gereckt sein. Die Reckung der Folie führt unter anderem dazu, dass sie polarisierende Eigenschaften erhält, die als weiteres Sicherheitsmerkmal genutzt werden können. Zweckmäßig kann es auch sein, wenn das Substratmaterial ein mehrschichtiger Verbund ist, der wenigstens eine Schicht aus Papier oder einem papierartigen Material aufweist. Ein solcher Verbund zeichnet sich durch eine außerordentlich große Stabilität aus, was für die Haltbarkeit des Papiers von großem Vorteil ist. Denkbar ist auch, als Substratmaterial ein mehrschichtiges, papierfreies Kompositmaterial einzusetzen. Dieses Kompositmaterial kann in bestimmten Klimaregionen der Erde mit Vorteil eingesetzt werden. Alle als Substratmaterial eingesetzten Materialien können Zusatzstoffe aufweisen, die als Echtheitsmerkmal dienen. Dabei ist in erster Linie an Lumineszenzstoffe zu denken, die im sichtbaren Wellenlängenbereich vorzugsweise transparent sind und im nicht sichtbaren Wellenlängenbereich durch ein geeignetes Hilfsmittel, z.B. eine UV- oder IR-Strahlung emittierende Strahlungsquelle, angeregt werden können, um eine sichtbare oder zumindest mit Hilfsmitteln detektierbare Lumineszenz zu erzeugen.

Zur Bildung der Beschichtung, die auf die eine Seite des Substrates aufgebracht wird und die eine nicht selbsttragende Schicht ist, werden Lacke herangezogen. Als Lacke eignen sich lösungsmittelhaltige Zweikomponentenlacke, wässrige Dispersionen und UV-Lacke, bevorzugt UV-Lacke mit hohem Festkörperanteil. Als Lack kann ein transparenter Lack oder ein farbiger Lack verwendet werden.

Die auf die eine Seite des Substrates aufgebrachte Beschichtung, die eine nicht selbsttragende Schicht ist, weist vorzugsweise vernetztes Gummi arabicum auf. Weiter bevorzugt besteht die Beschichtung im Wesentlichen aus vernetztern Gummi arabicum. Gummi arabicum ist ein verzweigtes Polysaccharid, das schwach saure Eigenschaften aufweist und in natürlicher Form als neutrales oder schwach saures Kalium-, Calcium- oder Magnesiumsalz vorkommt. Zur Bildung der Beschichtung kann ein wässriges Gemisch herangezogen werden, das mittels eines Ionenaustauscherharzes (z.B. "Levatit Monoplus SP 112 H" der Firma Lanxess) in die H⁺-Form überführtes Gummi arabicum (z.B. "Quickgum Type 8074" der Firma Norevo GmbH) und ein Vernetzungsmittel enthält. Als Vernetzungsmittel kann mit Vorteil ein polyfunktioneller Aziridin-Vernetzer (z.B. "Crosslinker CX-100" der Firma DSM-Neoresins) verwendet werden. Das wässrige Gemisch kann z.B. durch Drucken, bevorzugt mittels Siebdruck, auf das Substrat aufgetragen und danach bei Raumtemperatur oder bei erhöhter Temperatur getrocknet und dabei vernetzt werden. Das mittels Ionenaustauscherharz behandelte, in die H⁺-Form überführte Gummi arabicum weist nach der Vernetzung eine sehr vorteilhafte Wasserfestigkeit auf.

Als Alternative zur vorstehend erwähnten Verwendung von vernetztem Gummi arabicum kann die auf die eine Seite des Substrates aufgebrachte Beschichtung, die eine nicht selbsttragende Schicht ist, mittels eines Vernetzungsmittels vernetzte Stärke (Amylose) aufweisen. In diesem Fall wird bevorzugt, dass die Beschichtung im Wesentlichen aus mittels eines Vernetzungsmittels vernetzter Stärke (Amylose) besteht. Zur Bildung der Beschichtung kann ein wässriges Gemisch herangezogen werden, das lösliche Stärke, d.h. Amylose, und ein Vernetzungsmittel enthält. Als Vernetzungsmittel kann mit Vorteil ein di- oder höherfunktionalisierter Isocyanat-Vernetzer verwendet werden. Das Vernetzungsmittel sollte vorzugsweise in Wasser emulgierbar bzw. dispergierbar sein. Das wässrige Gemisch wird durch Drucken, bevorzugt mittels Siebdruck, auf das Substrat aufgetragen und danach bei Raumtemperatur oder bei erhöhter Temperatur getrocknet und dabei vernetzt werden.

Die Beschichtung wird durch Drucken, insbesondere durch ein Tief-, Flexo-, Sieb-, Offset- oder Transferdruckverfahren, auf das Substrat aufgebracht.

Mit dem Begriff "durchgehende Öffnung" ist ein Durchgangsloch gemeint, d.h. eine Öffnung, die sowohl das Substrat, als auch die ggf. auf das Substrat aufgebrachte Beschichtung geradlinig durchstößt.

Die durchgehende Öffnung, die im Substrat und der auf das Substrat aufgebrachten Beschichtung erzeugt wird, kann durch Stanzen oder Schneiden, insbesondere durch Laserschneiden hergestellt werden.

Die durchgehende Öffnung kann beliebige Umrisskonturen aufweisen und beispielsweise rund, oval, rechteckig, trapezförmig, sternförmig oder auch streifenförmig ausgebildet sein. Die durchgehende Öffnung kann sich aus mehreren durchgehenden Teilöffnungen zusammensetzen, die durch Stege aus dem Substrat und der auf das Substrat aufgebrachten Beschichtung getrennt sind. Die durchgehenden Teilöffnungen können dabei beliebige Umrisskonturen aufweisen und werden vorzugsweise als zusätzliches Gestaltungselement benutzt. Für die Erzeugung der jeweiligen Teilöffnungen können alle oben genannten Verfahren zur Erzeugung der erfindungsgemäßen Öffnung analog verwendet werden.

Die zumindest teilweise transluzente oder transparente Folie, die auf die der Beschichtung gegenüberliegenden Seite des Substrates aufgebracht wird, so dass die Öffnung einseitig mit der zumindest teilweise transluzenten oder transparenten Folie verschlossen ist, ist bevorzugt transparent ausgeführt. Unter transparent ist hierbei eine Lichtdurchlässigkeit von mindestens 90 % des auftreffenden Lichtes zu verstehen, unter transluzent eine Lichtdurchlässigkeit von unter 90 %, vorzugsweise zwischen 80 % und 20 %. Vorzugsweise weist die zumindest teilweise transluzente oder transparente Folie zum Verschließen der Öffnung im Bereich der Öffnung wenigstens einen transluzenten Bereich auf. Insbesondere wird bevorzugt, dass die zumindest teilweise transluzente Folie zum Verschließen der Öffnung im Bereich der Öffnung wenigstens einen transparenten Bereich aufweist. Als Materialien für die zumindest teilweise transluzente oder transparente Folie kommen beispielsweise die Kunststoffe PET (Polyethylenterephthalat), PBT (Polybutylenterephthalat), PP (Polypropylen), PA (Polyamid) und PE

(Polyethylen) in Betracht. Die Folie kann ferner monoaxial oder biaxial gereckt sein.

Die zumindest teilweise transluzente oder transparente Folie zum Verschließen der Öffnung kann als Streifen, Patch, Etikett oder Prägefolienelement auf das Substrat aufgebracht, insbesondere auflaminiert werden. Vorzugsweise erfolgt das Aufbringen mittels einer Klebstoff- oder Lackschicht. Als Klebstoff können die vorstehend erwähnten Klebstoffe verwendet werden. Ein Patch ist hierbei ein etikettenförmiges Einzelelement. Ein Streifen weist eine Breite auf, die wesentlich geringer ist als seine Länge, wobei der Streifen vorzugsweise von einer Kante des Substrates zu einer gegenüberliegenden Kante reicht.

Die vorstehend erwähnte Beschichtung, die auf die eine Seite des Substrates aufgebracht wird, und/oder die vorstehend erwähnte zumindest teilweise transluzente oder transparente Folie kann zweckmäßig wenigstens ein Sicherheitsmerkmal aufweisen. Das Sicherheitsmerkmal ist insbesondere eine Beugungsstruktur, wie etwa ein (Volumen-)Hologramm, oder eine hologrammähnliche Beugungsstruktur, eine Mattstruktur, eine Metallisierung, wobei auch mehrere verschiedenfarbige Metalle verwendet werden können, eine Perforation, eine Linsen- oder Mikrospiegelstruktur, ein mikrooptisches System, insbesondere eine mikrooptische Moiré-Vergrößerungsanordnung, ein Dünnschichtelement, ein Polarisationsfilter oder ein Aufdruck, der wenigstens einen Stoff mit optisch variablen, lumineszierenden, elektrisch leitfähigen oder magnetischen Eigenschaften aufweist. Als Stoffe mit optisch variablen Eigenschaften eignen sich z.B. Effektpigmente, insbesondere auf der Basis von flüssigkristallinen Polymeren hergestellte Pigmente oder sogenannte Perlglanzpigmente, wie etwa die von der Firma Merck KGaA unter der Bezeichnung Iriodin^{®} oder Colorcrypt vertriebenen Silberweiß-, Goldglanz- oder Metallglanzpigmente. Sowohl Pigmente auf der Basis von flüssigkristallinern Material als auch

Perlglanzpigmente sind für sich genommen transluzent. Als Stoffe mit optisch variablen Eigenschaften eignen sich ferner Interferenzschichtpigmente. Interferenzschichtpigmente weisen typischerweise einen Dünnschichtaufbau auf, der zweckmäßig zumindest eine Reflexionsschicht, eine Absorberschicht und eine zwischen der Reflexionsschicht und der Absorberschicht angeordnete dielektrische Abstandsschicht enthält. Interferenzschichtpigmente können für sich genommen transluzent sein, wenngleich auch opake Interferenzschichtpigmente bekann sind.

Die zumindest teilweise transluzente oder transparente Folie kann insbesondere im Bereich der Öffnung des erfindungsgemäßen Sicherheitselements ein Sicherheitsmerkmal aufweisen.

Die auf das Substrat aufgebrachte Beschichtung kann im Wesentlichen transparent sein. Alternativ kann die auf das Substrat aufgebrachte Beschichtung eine für den Betrachter wahrnehmbare Farbe aufweisen.

Der Schritt des Aufbringens der Beschichtung auf das Substrat kann Teil eines für eine Banknote vorgesehenen Druckverfahrens, insbesondere Tief-, Flexo-, Sieb-, Offset- oder Transferdruck, sein.

Die auf das Substrat aufgebrachte Beschichtung kann ein- oder mehrlagig ausgebildet sein und aus einer, zwei, drei, vier oder mehr Lagen bestehen. Insbesondere kann die Beschichtung eine dunkle Untergrundschicht und eine über der dunklen Untergrundschicht angeordnete optisch variable Schicht aufweisen, wobei die optisch variable Schicht optisch variable Pigmente, insbesondere Interferenzschichtpigmente oder auf der Basis von flüssigkristallinen Polymeren hergestellte Pigmente enthält.

Gemäß einer zweiten bevorzugten Ausführungsform wird ein Sicherheitselement, das ein Substrat mit mindestens einer Öffnung aufweist, wobei die Öffnung einseitig mit einer zumindest teilweise transluzenten oder transparenten Folie verschlossen ist, hergestellt, indem eine Beschichtung auf ein mit einer durchgehenden Öffnung versehenes Substrat im Bereich der Öffnung aufgebracht wird, so dass die die Beschichtung innerhalb der Öffnung nicht vorhanden bzw. im Wesentlichen nicht vorhanden ist, und eine zumindest teilweise transluzente Folie auf die der Beschichtung gegenüberliegenden Seite des Substrates aufgebracht wird, so dass die Öffnung einseitig mit der zumindest teilweise transluzenten oder transparenten Folie verschlossen ist und die Beschichtung auf dem Substrat im Wesentlichen im Bereich der Folienfläche angeordnet ist.

Die Öffnung im Substrat kann, wie bereits beschrieben, durch Verfahren wie etwa Stanzen oder Schneiden, insbesondere Laserschneiden, in das Substrat eingebracht werden. Ebenso kann die Öffnung bereits während der Herstellung des Substrates, z.B. während der Papierherstellung, in das Substrat eingebracht werden.

Das Aufbringen der Beschichtung auf das mit einer durchgehenden Öffnung versehene Substrat wird vorzugsweise passergenau durchgeführt, z.B. indem eine Beschichtung oder eine Folie ganzflächig auf das Substrat aufgebracht und danach im Bereich der durchgehenden Öffnung mittels Laserablation entfernt wird. Ebenso kann eine Beschichtung durch Drucken, insbesondere durch ein Tief-, Flexo-, Sieb-, Offset- oder Transferdruckverfahren, passergenau auf das Substrat aufgebracht werden.

Als das Substrat, die Beschichtung und die zumindest teilweise transluzente oder transparente Folie sind jeweils die obenstehend erwähnten, im Zusammenhang mit der ersten bevorzugten Ausführungsform beschriebenen Substrate, Beschichtungen bzw. Folien verwendbar, weswegen eine Wiederholung der oben genannten Einzelheiten an dieser Stelle unterbleibt.

In einer Variante der vorstehend beschriebenen zweiten bevorzugten Ausführungsform kann die Beschichtung auch nach der Folienkaschierung aufgebracht werden.

In den einzelnen Ausführungsformen kann die jeweils auf das Substrat aufgebrachte Beschichtung vorzugsweise die gesamte Substratseite bedecken, so dass das Substrat im Wesentlichen vollflächig mit der Beschichtung bedeckt ist. Durch die im Wesentlichen vollflächige Bedeckung des Substrates kann das Aufwellen des Substrates erheblich eingedämmt werden.

In den einzelnen Ausführungsformen kann die jeweils auf das Substrat aufgebrachte Beschichtung die Substratseite kontinuierlich mit annähernd gleich bleibender Schichtdicke bedecken. Die Beschichtung kann aber auch in Form einer Rasterung, z.B. in Form von Streifen, vorliegen, sofern der Effekt der Gegenkraft zur zumindest teilweise transluzenten oder transparenten Folie auf der der Beschichtung gegenüberliegenden Seite des Substrats erhalten wird.

Die Erfindung wird anhand der nachfolgenden Ausführungsvarianten bzw. Beispiele in Verbindung mit den ergänzenden Figuren verdeutlicht.

Die Darstellungen in den Figuren sind des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Beispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen die Figuren schematisch in Seitenansicht:

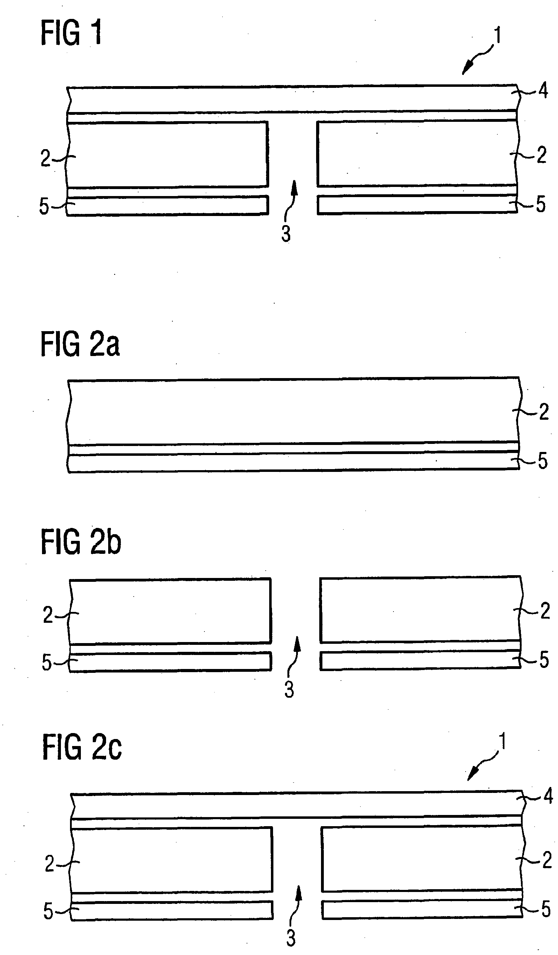

- Fig. 1: ein Sicherheitselement mit einem Substrat mit einer Öffnung, die einseitig mit einer zumindest teilweise transluzenten oder transparenten Folie verschlossen ist, wobei sich auf der der Folie gegenüberliegenden Seite des Substrates im Bereich der Öffnung und im Wesentlichen im Bereich der Folienfläche eine Beschichtung befindet, die innerhalb der Öffnung nicht vorhanden bzw. im Wesentlichen nicht vorhanden ist;
- Fig. 2: ein nicht erfindungsgemäßes Verfahren zur Herstellung des Sicherheitselements aus Fig. 1, worin im Substrat und der auf das Substrat aufgebrachten Beschichtung eine durchgehende Öffnung erzeugt wird und anschließend eine zumindest teilweise transluzente Folie auf die der Beschichtung gegenüberliegenden Seite des Substrates aufgebracht wird, so dass die Öffnung einseitig mit der zumindest teilweise transluzenten oder transparenten Folie verschlossen ist und die Beschichtung auf dem Substrat im Wesentlichen im Bereich der Folienfläche angeordnet ist;

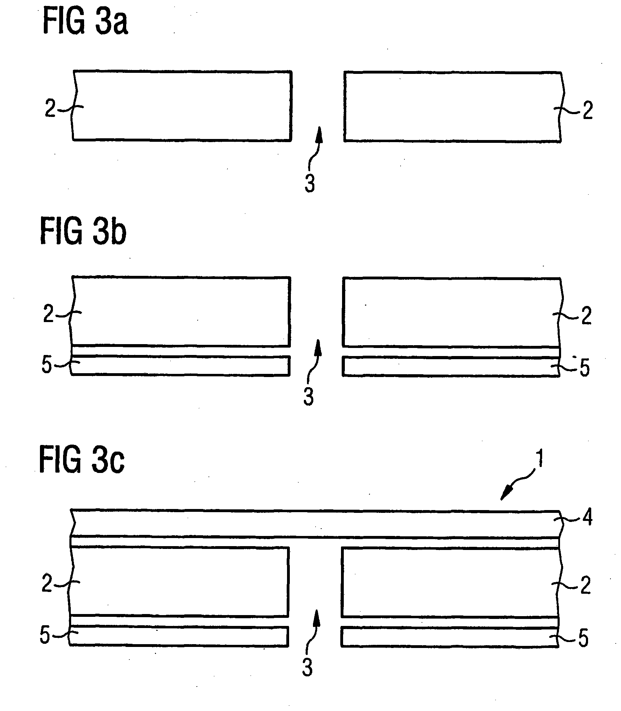

- Fig. 3: ein weiteres Verfahren zur Herstellung des Sicherheitselements aus Fig.1, worin auf ein mit einer durchgehenden Öffnung versehenes Substrat eine Beschichtung so aufgebracht wird, dass die Beschichtung innerhalb der Öffnung nicht vorhanden bzw. im Wesentlichen nicht vorhanden ist, und anschließend eine zumindest teilweise transluzente oder transparente Folie auf die der Beschichtung gegenüberliegenden Seite des Substrates aufgebracht wird, so dass die Öffnung einseitig mit der zumindest teilweise transluzenten oder transparenten Folie verschlossen ist und die Beschichtung auf dem Substrat im Wesentlichen im Bereich der Folienfläche angeordnet ist.

Fig.1 zeigt ein Sicherheitselement 1, das ein Substrat 2 mit einer Öffnung 3 aufweist, wobei die Öffnung 3 einseitig mit einer zumindest teilweise transluzenten oder transparenten Folie 4 verschlossen ist und sich auf der der Folie 4 gegenüberliegenden Seite des Substrates 2 im Bereich der Öffnung 3 und im Wesentlichen im Bereich der Folienfläche eine Beschichtung 5 befindet. Innerhalb der Öffnung 3 ist die Beschichtung 5 nicht vorhanden bzw. im Wesentlichen nicht vorhanden. Im Bereich der Öffnung 3 weist die zumindest teilweise transluzente oder transparente Folie 4 vorzugsweise einen transluzenten Bereich auf. Insbesondere wird bevorzugt, dass die zumindest teilweise transluzente oder transparente Folie 4 im Bereich der Öffnung 3 einen transparenten Bereich aufweist.

Fig. 2 zeigt ein Verfahren zur Herstellung des Sicherheitselements 1 aus Fig. 1. Wie in Fig. 2a gezeigt, wird auf eine Seite des Substrates 2 zunächst eine Beschichtung 5 aufgebracht. In einem darauffolgenden, in Fig. 2b gezeigten Schritt wird in dem Substrat 2 und der auf das Substrat aufgebrachten Beschichtung 5 durch Stanzen bzw. (Laser-)Schneiden eine durchgehende Öffnung 3 erzeugt. Anschließend wird gemäß Fig. 2c auf die der Beschichtung 5 gegenüberliegenden Seite des Substrates 2 eine zumindest teilweise transluzente oder transparente Folie 4 aufgebracht, so dass die Öffnung 3 einseitig mit der zumindest teilweise transluzenten oder transparenten Folie 4 verschlossen ist und die Beschichtung 5 auf dem Substrat 2 im Wesentlichen im Bereich der Fläche der Folie 4 angeordnet ist.

Alternativ kann das erfindungsgemäße Sicherheitselement 1 gemäß dem in Fig. 3 gezeigten Verfahren hergestellt werden. Wie in Fig. 3a gezeigt, wird zunächst ein mit einer durchgehenden Öffnung 3 versehenes Substrat 2 bereitgestellt. Auf das Substrat 2 wird eine Beschichtung 5 im Bereich der Öffnung 3 so aufgebracht, dass die Beschichtung innerhalb der Öffnung 3 nicht vorhanden bzw. im Wesentlichen nicht vorhanden ist (Fig. 3b). Anschließend wird gemäß Fig. 3c auf die der Beschichtung 5 gegenüberliegenden Seite des Substrates 2 eine zumindest teilweise transluzente oder transparente Folie 4 aufgebracht, so dass die Öffnung 3 einseitig mit der zumindest teilweise transluzenten oder transparenten Folie 4 verschlossen ist und die Beschichtung 5 auf dem Substrat 2 im Wesentlichen im Bereich der Fläche der Folie 4 angeordnet ist.

In einer Variante zu dem in Fig. 3 gezeigten Verfahren zur Herstellung des erfindungsgemäßen Sicherheitselements wird zunächst die Folie 4 auf das mit der Öffnung versehene Substrat 2 aufgebracht und anschließend die Beschichtung 5 so auf das Substrat 2 aufgebracht, dass innerhalb der Öffnung 3 keine oder im Wesentlichen keine Beschichtung vorhanden ist, die Öffnung 3 einseitig mit der zumindest teilweise transluzenten oder transparenten Folie verschlossen ist und die Beschichtung auf dem Substrat 2 im Wesentlichen im Bereich der Fläche der Folie 4 angeordnet ist.

## Patentansprüche

1. Verfahren zur Herstellung eines Sicherheitselements, das ein Substrat mit mindestens einer Öffnung aufweist, wobei die Öffnung einseitig mit einer zumindest teilweise transluzenten oder transparenten Folie verschlossen ist, umfassend
ein Aufbringen einer Beschichtung, die durch einen Lack gebildet wird und eine nicht selbsttragende Schicht ist, auf ein mit einer durchgehenden Öffnung versehenes Substrat im Bereich der Öffnung, so dass die Beschichtung innerhalb der Öffnung nicht vorhanden bzw. im Wesentlichen nicht vorhanden ist, wobei das Aufbringen der Beschichtung passergenau durch Drucken durchgeführt wird, und
ein Aufbringen einer zumindest teilweise transluzenten oder transparenten Folie auf die der Beschichtung gegenüberliegenden Seite des Substrats, so dass die Öffnung einseitig mit der teilweise transluzenten oder transparenten Folie verschlossen ist und die Beschichtung auf dem Substrat im Wesentlichen im Bereich der Folienfläche angeordnet ist.

2. Verfahren nach Anspruch 1, **dadurch gekennzeichnet, dass** das Aufbringen der Beschichtung durch ein Tief-, Flexo-, Sieb-, Offset- oder Transferdruckverfahren durchgeführt wird.

3. Verfahren nach einem der vorangehenden Ansprüche, **dadurch gekennzeichnet, dass** die Beschichtung bzw. die zumindest teilweise transluzente oder transparente Folie wenigstens ein Sicherheitsmerkmal aufweist.

4. Verfahren nach Anspruch 3, **dadurch gekennzeichnet, dass** das Sicherheitsmerkmal aus einer Beugungsstruktur, einem Dünnschichtelement, einem Polarisationsfilter oder einem wenigstens einen Stoff mit optisch variablen, lumineszierenden, elektrisch leitfähigen oder magnetischen Eigenschaften enthaltenden Aufdruck besteht.

5. Verfahren nach einem der vorangehenden Ansprüche, **dadurch gekennzeichnet, dass** die Beschichtung im Wesentlichen transparent ist oder eine für den Betrachter wahrnehmbare Farbe aufweist.

6. Verfahren nach einem der vorangehenden Ansprüche, **dadurch gekennzeichnet, dass** das Aufbringen der Beschichtung auf das Substrat Teil eines für eine Banknote vorgesehenen Druckverfahrens, insbesondere Tief-, Flexo-, Sieb-, Offset- oder Transferdruck, ist.

7. Verfahren nach einem der Ansprüche 1 bis 4, **dadurch gekennzeichnet, dass** die Beschichtung eine dunkle Untergrundschicht und eine über der dunklen Untergrundschicht angeordnete optisch variable Schicht aufweist, wobei die optisch variable Schicht optisch variable Pigmente, insbesondere Interferenzschichtpigmente oder auf der Basis von flüssigkristallinen Polymeren hergestellte Pigmente enthält.

8. Verfahren nach einem der vorangehenden Ansprüche, **dadurch gekennzeichnet, dass** die zumindest teilweise transluzente oder transparente Folie zum Verschließen der Öffnung als Streifen, Patch, Etikett oder Prägefolienelement auf das Substrat aufgebracht, insbesondere auflaminiert wird.

9. Verfahren nach einem der vorangehenden Ansprüche, **dadurch gekennzeichnet, dass** die zumindest teilweise transluzente oder transparente Folie zum Verschließen der Öffnung im Bereich der Öffnung wenigstens einen transparenten Bereich aufweist.

10. Verfahren nach einem der vorangehenden Ansprüche, **dadurch gekennzeichnet, dass** das Substrat aus Papier und/oder einer Kunststofffolie besteht.

## Claims

1. A method for manufacturing a security element which has a substrate with at least one opening, wherein the opening is closed on one side with an at least partly translucent or transparent foil, comprising
an application of a coating which is formed by a lacquer and which is a non-self-supporting layer, to a substrate supplied with a through-opening in the region of the opening, so that the coating is not present or substantially not present within the opening, wherein the application of the coating is carried out in exact register by printing, and
an application of an at least partly translucent or transparent foil to the side of the substrate opposing the coating, so that the opening is closed on one side with the partly translucent or transparent foil and the coating is arranged on the substrate substantially in the region of the foil area.

2. The method according to claim 1, **characterized in that** the application of the coating is carried out by a gravure, flexographic, screen, offset or transfer printing method.

3. The method according to any of the preceding claims, **characterized in that** the coating or the at least partly translucent or transparent foil has at least one security feature.

4. The method according to claim 3, **characterized in that** the security feature consists of a diffractive structure, a thin-film element, a polarization filter or a print containing at least one substance with optically variable, luminescent, electrically conductive or magnetic properties.

5. The method according to any of the preceding claims, **characterized in that** the coating is substantially transparent or has a color that is recognizable for the viewer.

6. The method according to any of the preceding claims, **characterized in that** the application of the coating to the substrate is part of a printing method intended for a bank note, in particular gravure printing, flexographic printing, screen printing, offset printing or transfer printing.

7. The method according to any of claims 1 to 4, **characterized in that** the coating has a dark base layer and an optically variable layer arranged over the dark base layer, wherein the optically variable layer contains optically variable pigments, in particular interference-layer pigments or pigments manufactured on the basis of liquid-crystalline polymers.

8. The method according to any of the preceding claims, **characterized in that** the at least partly translucent or transparent foil for closing the opening is applied, in particular laminated, to the substrate as a strip, patch, label or embossing foil element.

9. The method according to any of the preceding claims, **characterized in that** the at least partly translucent or transparent foil for closing the opening has at least one transparent region in the region of the opening.

10. The method according to any of the preceding claims, **characterized in that** the substrate consists of paper and/or a plastic foil.

## Revendications

1. Procédé de fabrication d'un élément de sécurité qui comporte un substrat ayant au moins une ouverture, l'ouverture étant obturée d'un côté par une feuille au moins partiellement translucide ou transparente, comprenant
une application d'un revêtement constitué par un vernis et étant une couche non autoportante, sur un substrat pourvu d'une ouverture en continu, dans la zone de l'ouverture, de telle manière que le revêtement ne se trouve pas ou ne se trouve essentiellement pas à l'intérieur de l'ouverture, cependant que l'application du revêtement est effectuée en parfait repérage par impression, et
une application d'une feuille au moins partiellement translucide ou transparente sur la face du substrat opposée au revêtement, de telle manière que l'ouverture est obturée d'un côté par la feuille au moins partiellement translucide ou transparente et que le revêtement est agencé sur le substrat essentiellement dans la zone de la surface de la feuille.

2. Procédé selon la revendication 1, **caractérisé en ce que** l'application du revêtement est effectuée par un procédé d'impression en creux, de flexographie, de sérigraphie, d'impression offset ou par transfert.

3. Procédé selon une des revendications précédentes, **caractérisé en ce que** le revêtement ou la feuille au moins partiellement translucide ou transparente comporte au moins une caractéristique de sécurité.

4. Procédé selon la revendication 3, **caractérisé en ce que** la caractéristique de sécurité consiste en une structure de diffraction, en un élément en couche mince, en un filtre de polarisation ou en une impression renfermant au moins une substance ayant des propriétés optiquement variables, luminescentes, électroconductrices ou magnétiques.

5. Procédé selon une des revendication précédentes, **caractérisé en ce que** le revêtement est essentiellement transparent ou présente une couleur perceptible pour l'observateur.

6. Procédé selon une des revendication précédentes, **caractérisé en ce que** l'application du revêtement sur le substrat est une partie d'un procédé d'impression prévu pour un billet de banque, notamment impression en creux, flexographie, sérigraphie, impression offset ou par transfert

7. Procédé selon une des revendications de 1 à 4, **caractérisé en ce que** le revêtement comporte une couche de fond foncée et une couche optiquement variable agencée au-dessus de la couche de fond foncée, la couche optiquement variable renfermant des pigments optiquement variables, notamment des pigments de couche d'interférence ou des pigments fabriqués sur la base de polymères à cristaux liquides.

8. Procédé selon une des revendication précédentes, **caractérisé en ce que** la feuille au moins partiellement translucide ou transparente destinée à l'obturation de l'ouverture est appliquée sur le substrat sous forme de ruban, de patch, d'étiquette ou d'élément de feuille à gaufrer, notamment laminée.

9. Procédé selon une des revendication précédentes, **caractérisé en ce que** la feuille au moins partiellement translucide ou transparente destinée à l'obturation de l'ouverture comporte dans la zone de l'ouverture au moins une zone transparente.

10. Procédé selon une des revendication précédentes, **caractérisé en ce que** le substrat consiste en du papier et/ou en une feuille en matière plastique.
